(19) Europäisches Patentamt European Patent Office Office européen des brevets

(11) **EP 4 711 239 A1**

(12) **EUROPÄISCHE PATENTANMELDUNG**

(43) Veröffentlichungstag:
**18.03.2026 Patentblatt 2026/12**

(21) Anmeldenummer: **25200517.8**

(22) Anmeldetag: **05.09.2025**

(51) Internationale Patentklassifikation (IPC):
**B62D 5/04** *(2006.01)* **B62D 5/00** *(2006.01)*

(52) Gemeinsame Patentklassifikation (CPC):
**B62D 5/006; B62D 5/046**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **11.09.2024 BE 202405614**

(71) Anmelder:
• **thyssenkrupp Presta Aktiengesellschaft
9492 Eschen (LI)**

• **thyssenkrupp AG
45143 Essen (DE)**

(72) Erfinder:
• **Bakos, Dezsö
6800 Feldkirch (AT)**
• **Károly, Tamás Gergely
9466 Sennwad (CH)**
• **Gyökeres, Jen
1097 Budapest (HU)**

(74) Vertreter: **thyssenkrupp Intellectual Property GmbH
ThyssenKrupp Allee 1
45143 Essen (DE)**

(54) **ELEKTROMECHANISCHES LENKSYSTEM UND VERFAHREN ZUM BETREIBEN EINES ELEKTROMECHANISCHEN LENKSYSTEMS MIT REDUZIERTER ENERGIERÜCKSPEISUNG**

(57) Die vorliegende Erfindung betrifft ein elektromechanisches Lenksystem (1), das einen ersten Aktuator (2) mit einem ersten Elektromotor (21) und einer ersten Steuereinheit (22) und einen zweiten Aktuator (3) mit einem zweiten Elektromotor (31) und einer zweiten Steuereinheit (32) umfasst, wobei der erste Elektromotor (21) fahrsituationsabhängig in einem Motorbetrieb oder einem Generatorbetrieb betrieben werden kann, wobei der erste Aktuator (2) und der zweite Aktuator (3) kommunikativ miteinander verbunden sind, und die zweite Steuereinheit (32) ausgebildet ist, bei einem Generatorbetrieb des ersten Elektromotors (21) den zweiten Elektromotor (32) derart anzusteuern, dass ein in einem Generatorbetrieb des ersten Elektromotors (21) generierter Strom (i_G21) von dem zweiten Elektromotor (32) energetisch umgewandelt wird, insbesondere durch Beeinflussung eines mittels einer Vektorregelung vorgegebenen Id-Stroms für den zweiten Elektromotor (31).

Ferner betrifft die Erfindung ein Verfahren zum Betreiben eines solchen Lenksystems (1) in einem Kraftfahrzeug, wobei ein in einem Generatorbetrieb des ersten Elektromotors (21) generierter Strom (i_G21) von dem zweiten Elektromotor (31) energetisch umgewandelt wird.

Fig. 1

EP 4 711 239 A1

**Beschreibung**

Die Erfindung betrifft ein Verfahren zum Betreiben eines elektromechanischen Lenksystems in einem Kraftfahrzeug, wobei das Lenksystem einen ersten Aktuator mit einem ersten Elektromotor und einen zweiten Aktuator mit einem zweiten Elektromotor umfasst, wobei der erste Elektromotor fahrsituationsabhängig in einem Motorbetrieb oder einem Generatorbetrieb betrieben wird. Des Weiteren betrifft die Erfindung ein elektromechanisches Lenksystem, das einen ersten Aktuator mit einem ersten Elektromotor und einer ersten Steuereinheit und einen zweiten Aktuator mit einem zweiten Elektromotor und einer zweiten Steuereinheit umfasst, wobei der erste Elektromotor fahrsituationsabhängig in einem Motorbetrieb oder einem Generatorbetrieb betrieben werden kann.

Im Stand der Technik sind ein solches Verfahren für ein Steer-by-Wire-Lenksystem als elektromechanisches Lenksystem und ein Steer-by-Wire-Lenksystem mit einem Feedback-Aktuator als erstem Aktuator und einem Lenksteller als zweitem Aktuator beispielsweise aus der EP 4 273 025 A1 bekannt.

Problematisch ist bei einem Betrieb eines Elektromotors eines Aktuators des Lenksystems ein Generatorbetrieb, bei dem elektrische Ströme generiert werden, weil die Gleichspannungsquelle und/oder der Anschluss an die Gleichspannungsquelle eines Bordnetzes eines Kraftfahrzeugs insbesondere aus Kostengründen nicht oder nicht mehr zur Aufnahme solcher generierten Ströme geeignet sind, und die generierten Ströme daher Schäden an Elektronikkomponenten verursachen können. So sind herkömmliche Fahrzeugbatterien, die insbesondere in Kraftfahrzeugen mit Verbrennungsmotor eingesetzt werden, zwar häufig geeignet, solche generierten Ströme aufzunehmen. Neuere Auslegungen von Bordnetzen mit einer höheren Bordnetzspannung und eine Bereitstellung der Betriebsspannung über eine Antriebsbatterie bei Hybrid- oder Elektrofahrzeugen machen das Zwischenschalten eines DC/DC-Wandlers (DC: direct current) erforderlich, der insbesondere aus Kostengründen nicht dazu ausgelegt ist, generierte Ströme aufzunehmen oder rückzuführen. Diese Problematik wird auch in der

DE 10 2021 205 851 A1 thematisiert, wobei in dieser Druckschrift vorgeschlagen wird, nicht benötigte Verbraucher zuzuschalten, wenn durch eine Rückspeisung eine Überspannung im Bordnetz bewirkt würde.

Nachteilig dabei ist, dass auf diese Weise ein Betreiben eines elektromechanischen Lenksystems in einem Kraftfahrzeug insbesondere davon abhängen kann, wie ein Bordnetz in einem Kraftfahrzeug betrieben wird.

Vor diesem Hintergrund ist es eine Aufgabe der vorliegenden Erfindung, ein verbessertes Verfahren zum Betreiben eines elektromechanischen Lenksystems und ein verbessertes elektromechanisches Lenksystem bereitzustellen. Insbesondere soll dabei verhindert werden, dass in einem Generatorbetrieb eines Elektromotors eines Aktuators des Lenksystems Schäden durch die generierten elektrischen Ströme entstehen.

Zur Lösung dieser Aufgabe werden ein Verfahren zum Betreiben eines elektromechanischen Lenksystems und ein elektromechanisches Lenksystem gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines elektromechanischen Lenksystems in einem Kraftfahrzeug, insbesondere ein Verfahren zum Betreiben eines Steer-by-Wire-Lenksystems in einem Kraftfahrzeug, vor, wobei das Lenksystem einen ersten Aktuator mit einem ersten Elektromotor und einen zweiten Aktuator mit einem zweiten Elektromotor umfasst. Der erste Elektromotor wird fahrsituationsabhängig in einem Motorbetrieb oder einem Generatorbetrieb betrieben, wobei ein in einem Generatorbetrieb des ersten Elektromotors generierter Strom von dem zweiten Elektromotor energetisch umgewandelt wird, wobei ein von dem zweiten Elektromotor bereitzustellendes Drehmoment dabei vorteilhafterweise im Wesentlichen unbeeinflusst bliebt. Insbesondere bleibt der erste Elektromotor dabei vorteilhafterweise frei von Einflüssen durch eine zusätzliche Welligkeit. Vorteilhafterweise bleibt ein Lenkgefühl für einen Fahrer so vorteilhafterweise im Wesentlichen unverändert. Vorteilhafterweise wird durch eine Umwandlung eines in einem Generatorbetrieb des ersten Elektromotors generierter Strom von dem zweiten Elektromotor aufgenommen und belastet so vorteilhafterweise nicht das Bordnetz. Vorteilhafterweise können so Schäden an mit dem Bordnetz verbundenen Elektronikkomponenten durch von dem ersten Elektromotor generierte Ströme verhindert werden. Vorteilhafterweise ist dabei das elektromechanische Lenksystem bezüglich der Handhabung solcher in einem Generatorbetrieb generierter Ströme autonom, und ist insbesondere nicht auf eine Auslegung eines Bordnetzes und eine bornetzseitige Handhabung von generierten Strömen angewiesen. Vorteilhafterweise wird hierdurch auch die Verwendbarkeit des elektromechanischen Lenksystems in einer Vielzahl von unterschiedlichen Fahrzeugmodellen und Fahrzeugtypen verbessert.

Der erste Elektromotor und der zweite Elektromotor sind insbesondere jeweils als ein Dreiphasenmotor ausgebildet, weiter insbesondere jeweils als ein Permanentmagnet-Synchronmotor. Vorteilhafterweise kann auch vorgesehen sein, dass der zweite Elektromotor fahrsituationsabhängig in einem Motorbetrieb oder einem Generatorbetrieb betrieben wird, wobei ein in einem Generatorbetrieb des zweiten Elektromotors generierter Strom von dem ersten Elektromotor energetisch umgewandelt wird. Auch hierbei wird der erste Elektromotor vorteilhafterweise so betrieben, dass die Umwandlung des generierten Stroms weitgehend ohne Einfluss auf ein von dem ersten Elektromotor bereitzustellendes Drehmoment bleibt. Insbesondere können auch sowohl der erste Elektromotor als auch der zweite Elektromotor fahrsituationsabhängig in einem Generatorbetrieb oder in einem Motorbetrieb betrieben werden, insbesondere auch gleichzeitig.

Insbesondere wird die Energie zum Betreiben des ersten Elektromotors oder des ersten Elektromotors und des zweiten Elektromotors über einen DC/DC-Wandler bereitgestellt, insbesondere von einer Antriebsbatterie eines Kraftfahrzeugs. Der DC/DC-Wandler sorgt dabei für eine Bereitstellung der für den Betrieb des ersten Elektromotors oder des ersten Elektromotors und des zweiten Elektromotors erforderliche Betriebsspannung. Vorteilhafterweise kann der DC/DC-Wandler dabei kostengünstig ausgestaltet werden, weil dieser nicht dazu ausgebildet sein muss, von den Elektromotoren des Lenksystems generierte Ströme umzuwandeln oder rückzuführen.

Gemäß einer bevorzugten Ausgestaltung ist vorgesehen, dass bei dem elektromechanischen Lenksystem der erste Aktuator ein über eine Lenkwelle auf eine Lenkhandhabe wirkender Feedback-Aktuator ist und der erste Elektromotor insofern ein Elektromotor des Feedback-Aktuators ist. Der zweite Aktuator ist vorteilhafterweise ein über ein Lenkgetriebe auf lenkbare Räder des Kraftfahrzeugs wirkender Lenksteller, wobei der zweite Elektromotor insofern ein Elektromotor des Lenkstellers ist. Diese Auslegung nutzt insbesondere aus, dass ein Elektromotor eines Lenkstellers bei einem Betrieb eines Kraftfahrzeugs überwiegend in einem Motorbetrieb betrieben wird und kaum in einem Generatorbetrieb betrieben wird, wohingegen ein Elektromotor eines Feedback-Aktuators häufig im Generatorbetrieb betrieben wird. Insbesondere kann eine Ausgestaltung aber auch vorsehen, dass bei dem elektromechanischen Lenksystem der erste Aktuator ein über ein Lenkgetriebe auf lenkbare Räder des Kraftfahrzeugs wirkender Lenksteller und der erste Elektromotor somit ein Elektromotor des Lenkstellers ist. Vorteilhafterweise ist der zweite Aktuator dann ein über eine Lenkwelle auf eine Lenkhandhabe wirkender Feedback-Aktuator und der zweite Elektromotor somit ein Elektromotor des Feedback-Aktuators.

Eine weitere vorteilhafte Ausgestaltung des Verfahrens sieht vor, dass der erste Elektromotor von einer ersten Steuereinheit auf ein Auftreten eines Generatorbetriebs überwacht wird. Weiter vorteilhaft wird ein Generatorbetrieb des ersten Elektromotors an eine zweite Steuereinheit des zweiten Elektromotors kommuniziert. Der zweite Elektromotor wird dann vorteilhafterweise von der zweiten Steuereinheit bei einem Generatorbetrieb des ersten Elektromotors so angesteuert, dass der von dem ersten Elektromotor generierte Strom von dem zweiten Elektromotor energetisch umgewandelt wird. Vorteilhafterweise sind der erste Aktuator und der zweite Aktuator also zu einem Signalaustausch miteinander verbunden. Die erste Steuereinheit ist insbesondere eine dem ersten Aktuator zugeordnete Steuereinheit, weiter insbesondere eine dem Feedback-Aktuator zugeordnete Steuereinheit, und kann insbesondere von einem sogenannten Power-Pack umfasst sein. Die zweite Steuereinheit ist insbesondere eine dem zweiten Aktuator zugeordnete Steuereinheit, weiter insbesondere eine dem Lenksteller zugeordnete Steuereinheit, und kann insbesondere von einem sogenannten Power-Pack umfasst sein. Es kann aber insbesondere auch vorgesehen sein, dass die erste Steuereinheit und die zweite Steuereinheit von einer übergeordneten Steuereinheit umfasst sind. Vorteilhafterweise kann durch die Überwachung des Vorliegens eines Generatorbetriebs eines Elektromotors direkt der andere Elektromotor so angesteuert werden, dass ein in dem Generatorbetrieb generierter Strom von diesem energetisch umgewandelt wird. Vorteilhafterweise kann so besonders schnell auf eine mögliche Belastung des Bordnetzes durch generierte Ströme reagiert werden.

Weiter vorteilhaft wird für den zweiten Elektromotor geprüft, ob ein aktueller Betrieb des zweiten Elektromotors eine energetische Umwandlung eines von dem ersten Elektromotor generierten Stroms zulässt. So kann insbesondere bei einer starken Beanspruchung des zweiten Elektromotors, insbesondere wenn bei einem Betrieb ein hohes Unterstützungsmoment von dem zweiten Elektromotor gefordert wird, der Fall auftreten, dass die zusätzliche Energie der generierten Ströme nicht oder zumindest nicht ohne negative Einflüsse auf das Betriebsverhalten des zweiten Elektromotors energetisch umgewandelt werden können. Daher ist vorteilhafterweise vorgesehen, dass der von dem ersten Elektromotor generierte Strom von dem zweiten Elektromotor energetisch umgewandelt wird, wenn der aktuelle Betrieb des zweiten Elektromotors die energetische Umwandlung des von dem ersten Elektromotor generierten Stroms zulässt. Vorteilhafterweise wird so ein normaler Betrieb des elektromechanischen Lenksystems sichergestellt.

Vorteilhafterweise ist daher für den Fall, dass der aktuelle Betrieb des zweiten Elektromotors die energetische Umwandlung des von dem ersten Elektromotor generierten Stroms nicht zulässt, vorgesehen, dass der von dem ersten Elektromotor generierte Strom von dem ersten Elektromotor energetisch umgewandelt wird, insbesondere ohne dabei ein für einen Fahrzeugnutzer wahrnehmbares Drehmoment zu erzeugen.

Gemäß einer besonders vorteilhaften Weiterbildung des Verfahrens wird der erste Elektromotor von der ersten Steuereinheit mittels einer Vektorregelung gesteuert, wobei ein d-Vektor und ein q-Vektor eines rotorbezogenen d/q-Systems für den ersten Elektromotor mittels eines ersten Reglers der ersten Steuereinheit, insbesondere eines PI-Reglers (PI: proportional-integral), beeinflusst werden. Für eine solche Vektorregelung erfolgt dabei insbesondere in bekannter Weise eine mathematische Umrechnung mittels einer Clarke-Transformation und einer anschließenden Park-Transformation von einem statorbezogenen dreiphasigen System in das rotorbezogene d/q-System, wobei der d-Vektor und der q-Vektor orthogonal zueinander ausgerichtet sind. Wie bei einer Vektorregelung üblich, wird der q-Vektor zur Einstellung eines bereitzustellenden Drehmoments genutzt, wobei der d-Vektor die magnetische Flussdichte beeinflusst. Zur energetischen Umwandlung eines von dem ersten Elektromotor in dem Generatorbetrieb generierten Stroms wird der d-Vektor des rotorbezogenen d/q-Systems für den ersten Elektromotor nun angepasst, insbesondere erhöht. Der d-Vektor wird dabei vorteilhafterweise derart angepasst, dass der generierte Strom vollständig oder zumindest nahezu vollständig umgewandelt wird. Die Anpassung des d-Vektors und somit die Anpassung des Id-Stroms erfolgt dabei insbesondere mittels des für die Vektorregelung genutzten Reglers. Der q-Vektor und somit der Iq-Strom bleiben dabei vorteilhafterweise unbeeinflusst, sodass kein für einen Fahrzeugnutzer wahrnehmbares Drehmoment durch die Umwandlung der generierten Ströme erzeugt wird.

Gemäß einer besonders vorteilhaften Ausgestaltung wird der zweite Elektromotor von der zweiten Steuereinheit mittels einer Vektorregelung gesteuert, wobei ein d-Vektor und ein q-Vektor eines rotorbezogenen d/q-Systems für den zweiten Elektromotor mittels eines zweiten Reglers der zweiten Steuereinheit, insbesondere eines PI-Reglers, beeinflusst werden. Zur energetischen Umwandlung eines von dem ersten Elektromotor in dem Generatorbetrieb generierten Stroms wird dabei vorteilhafterweise der d-Vektor des rotorbezogenen d/q-Systems für den zweiten Elektromotor angepasst, insbesondere erhöht. Somit wird vorteilhafterweise die magnetische Flussdichte beeinflusst, was letztlich insbesondere zu einer Umwandlung in Wärmeenergie führt, wobei ein von dem zweiten Elektromotor bereitzustellendes Drehmoment vorteilhafterweise weitgehend unbeeinflusst bleibt.

Eine vorteilhafte Weiterbildung sieht vor, dass auch der erste Elektromotor von der ersten Steuereinheit mittels einer Vektorregelung gesteuert wird. Vorteilhafterweise wird dabei zur energetischen Umwandlung eines von dem ersten Elektromotor in dem Generatorbetrieb generierten Stroms der d-Vektor des rotorbezogenen d/q-Systems für den ersten Elektromotor erhöht wird, wenn ein resultierender dq-Vektor des rotorbezogenen d/q-Systems für den zweiten Elektromotor einen Phasen-Nennstrom erreicht. Erreicht ein resultierender dq-Vektor des rotorbezogenen d/q-Systems für den zweiten Elektromotor einen Phasen-Nennstrom, so bedeutet das insbesondere, dass der aktuelle Betrieb des zweiten Elektromotors die energetische Umwandlung des von dem ersten Elektromotor generierten Stroms nicht in ausreichender Weise zulässt. Das kann insbesondere bei Lenkmanövern mit starker Lenkaktivität der Fall sein. In diesem Fall wird also vorteilhafterweise ein generierter Strom von dem ersten Elektromotor umgewandelt. So können vorteilhafterweise selbst dann Schäden von an das Bordnetz angeschlossenen Elektronikkomponenten durch von dem ersten Elektromotor in dem Generatorbetrieb generierten Strömen vermieden werden, wenn der zweite Elektromotor aufgrund einer fahrsituationsabhängigen Auslastung des zweiten Elektromotors nicht oder nicht vollständig zur Umwandlung dieser Ströme zur Verfügung steht. Für eine Prüfung, ob der aktuelle Betrieb des zweiten Elektromotors eine energetische Umwandlung eines von dem ersten Elektromotor generierten Stroms zulässt, wird dem ersten Elektromotor vorteilhafterweise von dem zweiten Elektromotor ein Signal bereitgestellt, das die aktuelle Sättigung des zweiten Elektromotors beschreibt. Wenn ein Wert dieses Signals größer als ein vordefinierter Schwellenwert ist, beginnt der erste Elektromotor vorteilhafterweise mit der Umwandlung des von dem ersten Elektromotor generierten Stroms, insbesondere zumindest entsprechend einem nicht von dem zweiten Elektromotor umgewandelten Anteil.

Eine weitere vorteilhafte Ausgestaltung sieht vor, dass der Regler den zur Reduzierung des von dem ersten Elektromotor generierten Stroms benötigten Id-Strom berechnet und den d-Vektor entsprechend anpasst. Der Id-Strom ist dabei insbesondere derjenige Strom, mit der von dem ersten Elektromotor generierten Strom durch entsprechende Nutzung in dem zweiten Elektromotor oder in dem ersten Elektromotor energetisch umgewandelt wird beziehungsweise "verbraucht" wird. Vorteilhafterweise kann dabei aufgrund der kommunikationstechnischen Verbindung des ersten Aktuators mit dem zweiten Aktuator zunächst mittels der Vektorregelung der Id-Strom für den zweiten Elektromotor entsprechend bestimmt und der zweite Elektromotor entsprechend angesteuert werden. Sollte sich der zweite Elektromotor dabei in Sättigung befinden oder der zweite Elektromotor in Sättigung geraten, wird vorteilhafterweise der erste Elektromotor unter Nutzung der Vektorregelung entsprechend angesteuert.

Zur Lösung der eingangs genannten Aufgabe wird des Weiteren ein elektromechanisches Lenksystem, insbesondere ein Steer-by-Wire-Lenksystem, vorgeschlagen, wobei das Lenksystem einen ersten Aktuator mit einem ersten Elektromotor und einer ersten Steuereinheit und einen zweiten Aktuator mit einem zweiten Elektromotor und einer zweiten Steuereinheit umfasst. Der erste Elektromotor kann dabei fahrsituationsabhängig in einem Motorbetrieb oder einem Generatorbetrieb betrieben werden. Des Weiteren ist vorgesehen, dass der erste Aktuator und der zweite Aktuator kommunikativ miteinander verbunden sind, und die zweite Steuereinheit ausgebildet ist, bei einem Generatorbetrieb des ersten Elektromotors den zweiten Elektromotor derart anzusteuern, dass ein in einem Generatorbetrieb des ersten Elektromotors generierter Strom von dem zweiten Elektromotor energetisch umgewandelt wird. Vorteilhafterweise wird ein Bordnetz in einem Kraftfahrzeug durch die Verwendung eines solchen Lenksystems vorteilhafterweise nicht mit von einem Elektromotor des Lenksystems beim Betrieb des Lenksystem generierten Strömen belastet. Vorteilhafterweise ist das elektromechanische Lenksystem ausgebildet, nach einem erfindungsgemäß ausgestalteten Verfahren betrieben zu werden. Es ergeben sich dabei insbesondere die im Zusammenhang mit der Beschreibung des Verfahrens und von dessen Ausgestaltungen beschriebenen Merkmale und Vorteile.

Eine vorteilhafte Ausgestaltung des Lenksystems sieht vor, dass der erste Aktuator ein über eine Lenkwelle auf eine Lenkhandhabe wirkender Feedback-Aktuator ist und der zweite Aktuator ein über ein Lenkgetriebe auf lenkbare Räder des Kraftfahrzeugs wirkender Lenksteller ist. Der erste Elektromotor ist bei dieser Ausgestaltung dementsprechend ein Elektromotor des Feedback-Aktuators und der zweite Elektromotor ein Elektromotor des Lenkstellers. Diese Auslegung nutzt insbesondere aus, dass ein Elektromotor eines Lenkstellers bei einem Betrieb eines Kraftfahrzeugs überwiegend in einem Motorbetrieb betrieben wird und kaum in einem Generatorbetrieb betrieben wird, wohingegen ein Elektromotor eines Feedback-Aktuators häufig im Generatorbetrieb betrieben wird. Vorteilhafterweise ist die zusätzliche Welligkeit in dem ersten Elektromotor und somit in dem Feedback-Aktuator für einen Fahrer beim Betrieb des Lenksystems in einem Kraftfahrzeug nicht zu spüren. Dies bedeutet, dass sich das Lenkgefühl vorteilhafterweise nicht ändert.

Insbesondere kann eine Ausgestaltung aber auch vorsehen, dass bei dem elektromechanischen Lenksystem der erste Aktuator ein über ein Lenkgetriebe auf lenkbare Räder des Kraftfahrzeugs wirkender Lenksteller und der erste Elektromotor somit ein Elektromotor des Lenkstellers ist. Vorteilhafterweise ist der zweite Aktuator dann ein über eine Lenkwelle auf eine Lenkhandhabe wirkender Feedback-Aktuator und der zweite Elektromotor somit ein Elektromotor des Feedback-Aktuators.

Der erste Elektromotor und der zweite Elektromotor sind insbesondere jeweils als ein Dreiphasenmotor ausgebildet, weiter insbesondere jeweils als ein Permanentmagnet-Synchronmotor. Die erste Steuereinheit und die zweite Steuereinheit sind dem jeweiligen Elektromotor vorteilhafterweise direkt zugeordnet. Die erste Steuereinheit und die zweite Steuereinheit können aber insbesondere von einer übergeordneten Steuereinheit umfasst sein. Der erste Elektromotor und der zweite Elektromotor werden vorteilhafterweise mittels einer Vektorregelung angesteuert, wobei vorteilhafterweise jedem der Elektromotoren ein entsprechender Regler, insbesondere ein PI-Regler zugeordnet ist.

Der PI-Regler hat vorteilhafterweise einen von der Drehgeschwindigkeit des Elektromotors abhängigen Referenzeingang für den Fall, dass der erste Elektromotor in einem Generatorbetrieb arbeitet. Ein tatsächlich im Bordnetz zur Energieversorgung der Elektromotoren des Lenksystems bereitgestellter Strom wird vorteilhafterweise aus den d-q Spannungs-Ausgängen des PI-Reglers und aus den Informationen bezüglich der d-q Ströme berechnet. Der PI-Regler ist dabei vorteilhafterweise ausgebildet, den Id-Strom, der benötigt wird, um den regenerativ in dem Bordnetz von einem Elektromotor im Generatorbetrieb erzeugten Strom zu reduzieren. Dieser Id-Strom wird zum Id-Referenzausgang der zweiten Steuerung des zweiten Elektromotors hinzugefügt. Mit der Summe Id_ref wird dann der zweite Elektromotor betrieben, und so die im Generatorbetrieb erzeugten Ströme energetisch umgewandelt, vorteilhafterweise nahezu ohne Einfluss auf das von dem Elektromotor bereitzustellende Drehmoment.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:

Fig. 1   in einer vereinfachten perspektivischen Darstellung ein Ausführungsbeispiel für ein erfindungsgemäß ausgebildetes elektromechanisches Lenksystem; und

Fig. 2   ein vereinfacht dargestelltes Ablaufdiagramm zur Erläuterung eines Ausführungsbeispiels für ein erfindungsgemäß ausgebildetes Verfahren zum Betreiben eines elektromechanischen Lenksystems.

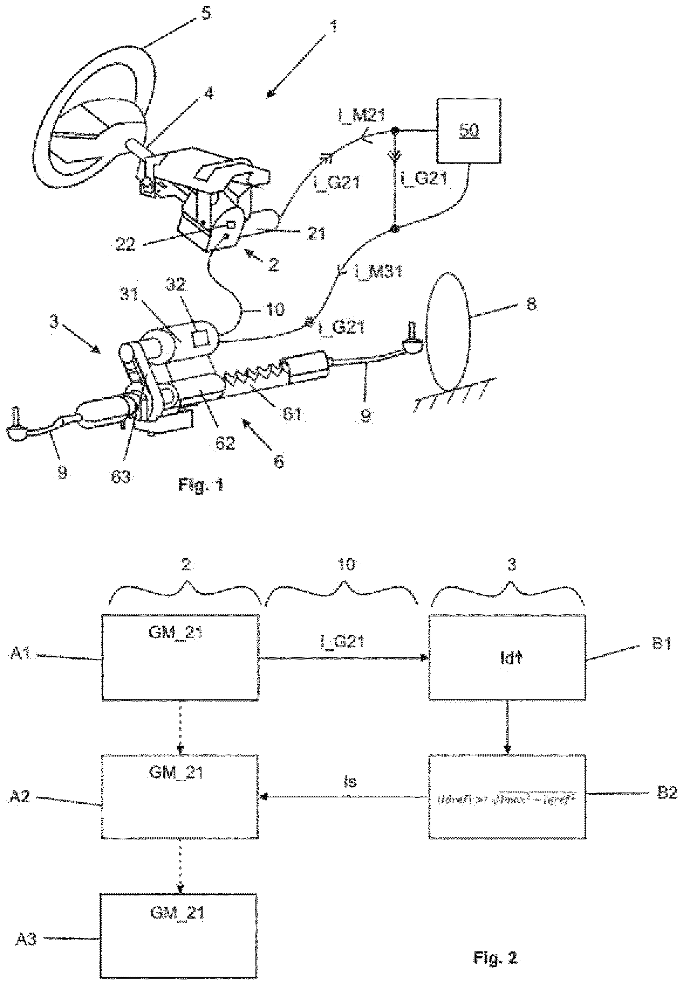

In Fig. 1 ist vereinfacht ein Ausführungsbeispiel für ein erfindungsgemäß ausgebildetes elektromechanisches Lenksystem 1 dargestellt, das in diesem Ausführungsbeispiel als Steer-by-Wire-Lenksystems ausgebildet ist. Das Lenksystem 1 umfasst einen ersten Aktuator 2 mit einem ersten Elektromotor 21 und einer ersten Steuereinheit 22 und einen zweiten Aktuator 3 mit einem zweiten Elektromotor 31 und einer zweiten Steuereinheit 32. Der erste Aktuator 2 ist in diesem Ausführungsbeispiel ein über eine Lenkwelle 4 des Lenksystems 1 auf eine drehfest mit der Lenkwelle 4 verbundene Lenkhandhabe 5 wirkender Feedback-Aktuator und der erste Elektromotor 21 ein Feedback-Aktuator-Elektromotor. Der zweite Aktuator 3 ist in diesem Ausführungsbeispiel ein über ein Lenkgetriebe 6 auf lenkbare Räder 8 des Kraftfahrzeugs wirkender Lenksteller und der zweite Elektromotor 31 ein Lenksteller-Elektromotor. Beide Elektromotoren 21, 31 sind Dreiphasenmotoren, insbesondere Permanentmagnet-Synchronmotoren.

Der erste Elektromotor 21 wird fahrsituationsabhängig in einem Motorbetrieb betrieben, insbesondere zur Erzeugung eines aktiven Gegenlenkens gegen eine von einem Fahrer auf die Lenkhandhabe aufgebrachte Lenkeingabe, oder in einem Generatorbetrieb betrieben, insbesondere wenn einer von einem Fahrer eingebrachten Lenkbewegung ein gewisser Lenkwiderstand entgegengebracht wird. Der erste Aktuator 2 mit dem ersten Elektromotor 21 ist also insbesondere ausgebildet, ein Drehmoment beziehungsweise ein Lenkwiderstands-Drehmoment auf die Lenkwelle 4 auszuüben, insbesondere zur Vermittlung eines für einen Fahrer eines Kraftfahrzeugs wahrnehmbaren Lenkgefühls.

Auch der zweite Elektromotor 31 kann grundsätzlich in einem Motorbetrieb und einem Generatorbetrieb betrieben werden, wobei ein Generatorbetrieb selten auftritt, beispielsweise dann, wenn die lenkbaren Räder aufgrund eines Hindernisses einen anderen Radlenkwinkel einnehmen. Ein Motorbetrieb des zweiten Elektromotors 31 ist dabei insbesondere dann erforderlich, wenn eine erfasste Lenkvorgabe, insbesondere eine von einem Fahrer eingebrachte Lenkbewegung, in einen entsprechenden Radlenkwinkel der gelenkten Räder 8 umgesetzt werden muss. Zur Umsetzung einer Lenkvorgabe in einen Radlenkwinkel der lenkbaren Räder 8 wirkt der zweite Aktuator 3 über das Lenkgetriebe 6 auf die lenkbaren Räder 8.

Konkret ist in diesem Ausführungsbeispiel vorgesehen, dass der zweite Elektromotor 31 des zweiten Aktuators 3 über einen Transmissionsriemen 63 auf einen mit einer als Zahnstange ausgebildeten Koppelstange 61 in Wirkverbindung stehenden Spindeltrieb 62 einwirkt. Durch entsprechende Ansteuerung des zweiten Elektromotors 31 wird der Spindeltrieb 62 zur Umsetzung einer Lenkvorgabe in eine Lenkbewegung der lenkbaren Räder 8 angetrieben. Dabei wirkt der zweite Aktuator über den mittels des zweiten Elektromotors 31 angetriebenen Spindeltrieb 62 auf die Koppelstange 61 und löst so eine Lenkbewegung der lenkbaren Räder 8 eines Kraftfahrzeugs aus, wobei die lenkbaren Räder 8 in diesem Ausführungsbeispiel in bekannter Weise über Spurstangen 9 mit der Koppelstange 61 verbunden sind. Die Spurstangen 9 selbst sind in bekannter Weise über Achsschenkel mit je einem gelenkten Rad 8 verbunden.

Der erste Elektromotor 21 und der zweite Elektromotor 31 des Lenksystems 1 sind über einen DC/DC-Wandler 50 mit einem Bordnetz eines Kraftfahrzeugs verbunden, wobei über den DC/DC-Wandler 50 die für einen Motorbetrieb der Elektromotoren 21, 31 benötigte Energie bereitgestellt wird. So ist in Fig. 1 für einen Motorbetrieb des ersten Elektromotors 21 symbolisch ein Stromfluss i_M21 von dem DC/DC-Wandler 50 zu dem ersten Elektromotor 21 dargestellt. Für einen Motorbetrieb des zweiten Elektromotors 31 ist zudem symbolisch ein Stromfluss i_M31 von dem DC/DC-Wandler 50 zu dem zweiten Elektromotor 21 dargestellt.

Mittels der den Elektromotoren 21, 31 zugeordneten Steuereinheiten 22, 32 werden der erste Elektromotor 21 und der zweite Elektromotor 31 jeweils basierend auf einer Vektorregelung angesteuert. Dazu wird das statorbezogene dreiphasige System in bekannter Weise in ein rotorbezogenes d/q-System überführt, was unter Verwendung einer Clarke-Transformation mit anschließender Park-Transformation durchgeführt wird. Der so für die Steuerung des jeweiligen Elektromotors 21, 31 erhaltene d-Vektor und erhaltene q-Vektor werden dann mittels eines von der jeweiligen Steuereinheit 22, 32 umfassten PI-Reglers zur Umsetzung einer Steuerungsvorgabe entsprechend angepasst. Wie üblich wird dabei über eine Anpassung des q-Werts das von dem jeweiligen Elektromotor 21, 32 bereitzustellende Drehmoment gesteuert, wohingegen der d-Wert Einfluss auf die magnetische Flussdichte hat.

Die zweite Steuereinheit 32 ist nun ausgebildet, bei einem Generatorbetrieb des ersten Elektromotors 21 den zweiten Elektromotor 32 derart anzusteuern, dass ein in dem Generatorbetrieb des ersten Elektromotors 21 generierter Strom i_G21 von dem zweiten Elektromotor 32 energetisch umgewandelt wird. Dazu ist der erste Aktuator 2 mit dem zweiten Aktuator 3 über eine Signalleitung 10 kommunikativ verbunden. Der erste Elektromotor 21 wird dabei von der ersten Steuereinheit 22 auf ein Auftreten eines Generatorbetriebs überwacht. Ein Generatorbetrieb des ersten Elektromotors 21 wird dann an die zweite Steuereinheit 32 des zweiten Elektromotors 31 kommuniziert, wobei der zweite Elektromotor 31 von dem PI-Regler der zweiten Steuereinheit 32 daraufhin so angesteuert wird, dass der im Rahmen der Vektorregelung vorgegebene Id-Strom für den zweiten Elektromotor 31 erhöht wird, was durch entsprechende Anpassung des d-Vektors erfolgt, wodurch der in dem Generatorbetrieb des ersten Elektromotors 21 generierte Strom i_G21 von dem zweiten Elektromotor 31 energetisch umgewandelt wird. Dadurch, dass dabei nur der d-Vektor, nicht aber der q-Vektor angepasst wird, hat der generierte Strom i_G21 vorteilhafterweise keinen Einfluss auf ein von dem zweiten Elektromotor 31 bereitzustellendes Drehmoment. Der von dem ersten Elektromotor 21 generierte Strom i_G21 wird so vorteilhafterweise in dem zweiten Elektromotor 31 "verbrannt" und belastet somit vorteilhafterweise nicht den DC/DC-Wandler 50 und auch nicht das Bordnetz. Symbolisch ist in Fig. 1 daher ein direkter Stromfluss i_G21 von dem ersten Elektromotor 21 zu dem zweiten Elektromotor 31 dargestellt.

Grundsätzlich kann in entsprechender Weise vorgesehen sein, dass ein von dem zweiten Elektromotor 31 generierter Strom von dem ersten Elektromotor 21 energetisch umgewandelt wird.

Unter Bezugnahme auf Fig. 2 wird nachfolgend ein vorteilhaftes Ausführungsbeispiel für ein Verfahren zum Betreiben eines elektromechanischen Lenksystems 1 in einem Kraftfahrzeug erläutert, wobei das Lenksystem 1 einen ersten Aktuator 2 mit einem ersten Elektromotor 21 und einen zweiten Aktuator 3 mit einem zweiten Elektromotor 31 umfasst, wobei der erste Elektromotor 21 fahrsituationsabhängig in einem Motorbetrieb oder einem Generatorbetrieb GM_21 betrieben wird, und wobei ein in einem Generatorbetrieb GM_21 des ersten Elektromotors 21 generierter Strom i_G21 innerhalb des Lenksystems 1 energetisch umgewandelt wird. Insbesondere kann dabei vorgesehen sein, dass auch das unter Bezugnahme auf Fig. 1 erläuterte Steer-by-Wire-Lenksystem 1 dazu ausgebildet ist, gemäß diesem Verfahren betrieben zu werden.

In Fig. 2 beziehen sich die links dargestellten Blöcke A1 bis A3 auf den ersten Aktuator 2, der insbesondere ein Feedback-Aktuator ist, und die rechts dargestellten Blöcke B1 und B2 auf den zweiten Aktuator 3, der insbesondere ein Lenksteller ist. Zwischen dem ersten Aktuator 2 und dem zweiten Aktuator 3 ist dabei eine Signalleitung 10 für eine Kommunikation zwischen dem ersten Aktuator 2 und dem zweiten Aktuator 3 vorgesehen.

Für den Block A1 ist nun vorgesehen, dass der erste Elektromotor 21 in einem Generatorbetrieb GM_21 betrieben wird und dabei der Strom i_21 generiert wird. Insbesondere ist vorgesehen, dass das Bordnetz, das die Elektromotoren 21, 31 mit Energie versorgt, als solches nicht dazu ausgebildet ist, solche generierten Ströme zu handhaben beziehungsweise zu der Energiequelle zurückzuführen. Der Generatorbetrieb GM_21 des ersten Elektromotors 21 wird dabei von der ersten Steuereinheit 22 erkannt und an die zweite Steuereinheit 32 kommuniziert und der generierte Strom i_G21 an den zweiten Aktuator 3 weitergeleitet, wobei der zweite Elektromotor 31 von der zweiten Steuereinheit 32 daraufhin so angesteuert wird, dass der von dem ersten Elektromotor 21 generierte Strom i_G21 von dem zweiten Elektromotor 32 energetisch umgewandelt wird, insbesondere im Wesentlichen ohne dabei ein von dem zweiten Elektromotor bereitzustellendes Drehmoment zu beeinflussen.

Dazu ist in diesem Ausführungsbeispiel vorgesehen, dass der zweite Elektromotor 31 von der zweiten Steuereinheit 32 mittels einer Vektorregelung gesteuert wird, wobei ein d-Vektor und ein q-Vektor eines rotorbezogenen d/q-Systems für den zweiten Elektromotor 31 mittels eines PI-Reglers der zweiten Steuereinheit 32 beeinflusst werden, und wobei zur energetischen Umwandlung des von dem ersten Elektromotor 21 generierten Stroms i_G21 der d-Vektor des rotorbezogenen d/q-Systems für den zweiten Elektromotor 32 erhöht wird, was nun in dem Block B1 ausgeführt wird. Der PI-Regler umfasst dabei vorteilhafterweise einen geschwindigkeitsabhängigen Referenzeingang, falls das der erste Elektromotor 21 des Lenksystems 1 im Generatorbetrieb arbeitet. Der tatsächliche Batteriestrom, also der von einer an das Bordnetz angeschlossenen Batterie bereitgestellte Strom und der generierte Strom i_G21, wird vorteilhafterweise aus den d-q Spannungs-Ausgängen des PI-Reglers und aus den Rückmeldungen der d-q Ströme berechnet. Der PI-Regler berechnet dann vorteilhafterweise den Id-Strom, der benötigt wird, um den von dem ersten Elektromotor 21 erzeugten Strom i_G21 zu reduzieren. Dieser Id-Strom wird vorteilhafterweise zum Id-Referenzausgang hinzugefügt, wobei der zweite Elektromotor 31 dann mit der Summe Id_ref angesteuert wird. Da der q-Wert hiervon unbeeinflusst bleibt, ergeben sich nahezu keine Auswirkungen auf das von dem zweiten Elektromotor 21 bereitzustellende Drehmoment.

In dem Block B2 ist nun vorgesehen, dass zusätzlich für den zweiten Elektromotor 31 geprüft wird, ob ein aktueller Betrieb des zweiten Elektromotors 31 eine energetische Umwandlung eines von dem ersten Elektromotor 21 generierten Stroms i_G21 zulässt. Wenn der aktuelle Betrieb des zweiten Elektromotors

31 die energetische Umwandlung des von dem ersten Elektromotor 21 generierten Stroms i_G21 zulässt, wird weiterhin der von dem ersten Elektromotor 21 generierte Strom i_G21 von dem zweiten Elektromotor 31, wie zuvor beschrieben, energetisch umgewandelt (Block B1). Für die Prüfung, ob der aktuelle Betrieb des zweiten Elektromotors 31 die energetische Umwandlung des von dem ersten Elektromotor 21 generierten Stroms i_G21 zulässt, stellt vorteilhafterweise der zweite Elektromotor 31 dem ersten Elektromotor 21 ein Signal bereit, das die aktuelle Sättigung des zweiten Elektromotors 31 beschreibt. Wenn ein Wert dieses Signals größer ist als ein vordefinierter Schwellenwert, beginnt der erste Elektromotor mit der Kompensation. Insbesondere kann auch geprüft werden, ob ein resultierender dq-Vektor des rotorbezogenen d/q-Systems für den zweiten Elektromotor 31 einen Phasen-Nennstrom erreicht. Dabei kann dann insbesondere weiter überprüft werden, ob die folgende Bedingung eingehalten wird:

$$|i_{dref}| > \sqrt{i_{MAX}^2 - i_{qref}^2}.$$

Ein aufgrund eines aktuellen Betriebs des zweiten Elektromotors 31 nicht umwandelbarer Stromanteil Is wird dann in dem zweiten Block von der zweiten Steuereinheit 32 bestimmt zu:

$$i_s > |i_{dref}| - \sqrt{i_{MAX}^2 - i_{qref}^2}.$$

Es erfolgt eine entsprechende Kommunikation von der zweiten Steuereinheit 32 an die erste Steuereinheit 22, wobei dann in Block A2 vorgesehen ist, dass zur energetischen Umwandlung des von dem ersten Elektromotor 21 in dem Generatorbetrieb GM_21 generierten Stroms i_G21, der in diesem Ausführungsbeispiel entsprechend schon auf den Strom Is reduziert worden ist, der d-Vektor des rotorbezogenen d/q-Systems für den ersten Elektromotor 21 mittels des PI-Reglers der ersten Steuereinheit 22 so angepasst wird, insbesondere erhöht wird, dass der Strom Is in den ersten Elektromotor 21 in entsprechender Weise, wie zu Block B2 beschrieben, "verbrannt", also umgewandelt wird.

In dem Block A3 ist dabei eine analoge Prüfung zu Block B2 vorgesehen.

Die in den Figuren dargestellten und im Zusammenhang mit diesen erläuterten Ausführungsbeispiele dienen der Erläuterung der Erfindung und sind für diese nicht beschränkend.

**Bezugszeichenliste**

1       Lenksystem
2       erster Aktuator

21   erster Elektromotor
22   erste Steuereinheit
3    zweiter Aktuator
31   zweiter Elektromotor
32   zweite Steuereinheit
4    Lenkwelle
5    Lenkhandhabe
6    Lenkgetriebe
61   Koppelstange (Zahnstange)
62   Spindeltrieb
63   Transmissionsriemen
8    lenkbares Rad
9    Spurstange
10   Signalleitung
50   DC/DC-Wandler
GM_21 Generatorbetrieb
i_G21  von dem ersten Elektromotor (21) im Generatorbetrieb generierter Strom
i_M21  über den DC/DC-Wandler bereitgestellter Strom für den Motorbetrieb des ersten Elektromotors (21)
i_M31  über den DC/DC-Wandler bereitgestellter Strom für den Motorbetrieb des zweiten Elektromotors (31)

**Patentansprüche**

1. Verfahren zum Betreiben eines elektromechanischen Lenksystems (1) in einem Kraftfahrzeug, wobei das Lenksystem (1) einen ersten Aktuator (2) mit einem ersten Elektromotor (21) und einen zweiten Aktuator (3) mit einem zweiten Elektromotor (31) umfasst, wobei der erste Elektromotor (21) fahrsituationsabhängig in einem Motorbetrieb oder einem Generatorbetrieb (GM_21) betrieben wird, **dadurch gekennzeichnet, dass** ein in einem Generatorbetrieb (GM_21) des ersten Elektromotors (21) generierter Strom (i_G21) von dem zweiten Elektromotor (31) energetisch umgewandelt wird.

2. Verfahren nach Anspruch 1, **dadurch gekennzeichnet, dass** der erste Elektromotor (21) von einer ersten Steuereinheit (22) auf ein Auftreten eines Generatorbetriebs (GM_21) überwacht wird, ein Generatorbetrieb (GM_21) des ersten Elektromotors (21) an eine zweite Steuereinheit (32) des zweiten Elektromotors (31) kommuniziert wird, und der zweite Elektromotor (31) von der zweiten Steuereinheit (32) bei einem Generatorbetrieb (GM_21) des ersten Elektromotors (21) so angesteuert wird, dass der von dem ersten Elektromotor (21) generierte Strom (i_G21) von dem zweiten Elektromotor (32) energetisch umgewandelt wird.

3. Verfahren nach Anspruch 1 oder Anspruch 2, **dadurch gekennzeichnet, dass** für den zweiten Elektromotor (31) geprüft wird, ob ein aktueller Betrieb des zweiten Elektromotors (31) eine energetische Umwandlung eines von dem ersten Elektromotor (21) generierten Stroms (i_G21) zulässt, wobei der von dem ersten Elektromotor (21) generierte Strom (i_G21) von dem zweiten Elektromotor (31) energetisch umgewandelt wird, wenn der aktuelle Betrieb des zweiten Elektromotors (31) die energetische Umwandlung des von dem ersten Elektromotor (21) generierten Stroms (i_G21) zulässt.

4. Verfahren nach Anspruch 3, **dadurch gekennzeichnet, dass** der von dem ersten Elektromotor (21) generierte Strom von dem ersten Elektromotor (21) energetisch umgewandelt wird, wenn der aktuelle Betrieb des zweiten Elektromotors (31) die energetische Umwandlung des von dem ersten Elektromotor (21) generierten Stroms (i_G21) nicht zulässt.

5. Verfahren nach Anspruch 4, **dadurch gekennzeichnet, dass** der erste Elektromotor (21) von der ersten Steuereinheit (22) mittels einer Vektorregelung gesteuert wird, wobei ein d-Vektor und ein q-Vektor eines rotorbezogenen d/q-Systems für den ersten Elektromotor (21) mittels eines ersten Reglers der ersten Steuereinheit (22) beeinflusst werden, wobei zur energetischen Umwandlung eines von dem ersten Elektromotors (21) in dem Generatorbetrieb (GM_21) generierten Stroms (i_G21) der d-Vektor des rotorbezogenen d/q-Systems für den ersten Elektromotor (21) erhöht wird.

6. Verfahren nach einem der vorstehenden Ansprüche, **dadurch gekennzeichnet, dass** der zweite Elektromotor (31) von der zweiten Steuereinheit (32) mittels einer Vektorregelung gesteuert wird, wobei ein d-Vektor und ein q-Vektor eines rotorbezogenen d/q-Systems für den zweiten Elektromotor (31) mittels eines zweiten Reglers der zweiten Steuereinheit (32) beeinflusst werden, wobei zur energetischen Umwandlung eines von dem ersten Elektromotor (21) in dem Generatorbetrieb (GM_21) generierten Stroms (i_G21) der d-Vektor des rotorbezogenen d/q-Systems für den zweiten Elektromotor (32) erhöht wird.

7. Verfahren nach Anspruch 6, **dadurch gekennzeichnet, dass** zur energetischen Umwandlung eines von dem ersten Elektromotor (21) in dem Generatorbetrieb (GM_21) generierten Stroms (i_G21) der d-Vektor des rotorbezogenen d/q-Systems für den ersten Elektromotor (21) erhöht wird, wenn ein resultierender dq-Vektor des rotorbezogenen d/q-Systems für den zweiten Elektromotor (31) einen Phasen-Nennstrom erreicht.

8. Verfahren nach einem der Ansprüche 5 bis 7, **dadurch gekennzeichnet, dass** der Regler den zur Reduzierung des von dem ersten Elektromotor (21)

generierten Stroms (i_G21) benötigten Id-Strom berechnet und den d-Vektor entsprechend anpasst.

9. Verfahren nach einem der vorstehenden Ansprüche, **dadurch gekennzeichnet, dass** eine Energie zum Betreiben des ersten Elektromotors (21) über einen DC/DC-Wandler (50) bereitgestellt wird.

10. Verfahren nach einem der vorstehenden Ansprüche, **dadurch gekennzeichnet, dass** der erste Aktuator (2) ein über eine Lenkwelle (4) auf eine Lenkhandhabe (5) wirkender Feedback-Aktuator ist und der zweite Aktuator (3) ein über ein Lenkgetriebe (6) auf lenkbare Räder (8) des Kraftfahrzeugs wirkender Lenksteller ist.

11. Elektromechanisches Lenksystem (1), das einen ersten Aktuator (2) mit einem ersten Elektromotor (21) und einer ersten Steuereinheit (22) und einen zweiten Aktuator (3) mit einem zweiten Elektromotor (31) und einer zweiten Steuereinheit (32) umfasst, wobei der erste Elektromotor (21) fahrsituationsabhängig in einem Motorbetrieb oder einem Generatorbetrieb (GM_21) betrieben werden kann, **dadurch gekennzeichnet, dass** der erste Aktuator (2) und der zweite Aktuator (3) kommunikativ miteinander verbunden sind, und die zweite Steuereinheit (32) ausgebildet ist, bei einem Generatorbetrieb (GM_21) des ersten Elektromotors (21) den zweiten Elektromotor (32) derart anzusteuern, dass ein in einem Generatorbetrieb (GM_21) des ersten Elektromotors (21) generierter Strom (i_G21) von dem zweiten Elektromotor (32) energetisch umgewandelt wird.

12. Lenksystem (1) nach Anspruch 11, **dadurch gekennzeichnet, dass** das Lenksystem (1) ausgebildet ist, nach einem Verfahren gemäß einem der Ansprüche 1 bis 10 in einem Kraftfahrzeug betrieben zu werden.

13. Lenksystem (1) nach Anspruch 11 oder Anspruch 12, **dadurch gekennzeichnet, dass** der erste Aktuator (2) ein über eine Lenkwelle (4) auf eine Lenkhandhabe (5) wirkender Feedback-Aktuator ist und der zweite Aktuator (3) ein über ein Lenkgetriebe (6) auf lenkbare Räder (8) des Kraftfahrzeugs wirkender Lenksteller ist.

**Fig. 1**

**Fig. 2**

EP 4 711 239 A1

**EUROPÄISCHER RECHERCHENBERICHT**

Nummer der Anmeldung

EP 25 20 0517

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2019 101811 A1 (SCHAEFFLER TECHNOLOGIES AG [DE]) 30. Juli 2020 (2020-07-30) * Absatz [0001] - Absatz [0012] * | 1,2,9-13 | INV. B62D5/04 B62D5/00 |
| A | DE 10 2021 205208 A1 (THYSSENKRUPP AG [DE]; THYSSENKRUPP PRESTA AG [LI]) 24. November 2022 (2022-11-24) * Absatz [0014] * * Absatz [0020] * | 1,11 | |
| A,D | EP 4 273 025 A1 (THYSSENKRUPP PRESTA AG [LI]; THYSSENKRUPP AG [DE]) 8. November 2023 (2023-11-08) | 1,11 | |
| A | BE 1 031 011 A1 (THYSSENKRUPP PRESTA AG [LI]; THYSSENKRUPP AG [DE]) 30. Mai 2024 (2024-05-30) * Anspruch 1 * | 1,11 | |
| A | CN 112 977 601 A (ZF AUTOMOTIVE GERMANY GMBH) 18. Juni 2021 (2021-06-18) * Anspruch 1 * | 1,11 | |
| A | DE 10 2023 201346 A1 (ZAHNRADFABRIK FRIEDRICHSHAFEN [DE]) 22. August 2024 (2024-08-22) * Absatz [0029] * | 1,11 | |
| A | DE 10 2006 021445 A1 (ATLAS FAHRZEUGTECHNIK GMBH [DE]) 15. November 2007 (2007-11-15) * Absatz [0007]; Anspruch 1 * | 1,11 | |
| A,D | DE 10 2021 205851 A1 (BOSCH GMBH ROBERT [DE]) 15. Dezember 2022 (2022-12-15) * Absatz [0006] * | 1,11 | |

RECHERCHIERTE SACHGEBIETE (IPC)

B62D

Der vorliegende Recherchenbericht wurde für alle Patentansprüche erstellt

| Recherchenort | Abschlußdatum der Recherche | Prüfer |
|---|---|---|
| Den Haag | 5. Februar 2026 | Pemberton, Paul |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**EP 4 711 239 A1**

## ANHANG ZUM EUROPÄISCHEN RECHERCHENBERICHT
## ÜBER DIE EUROPÄISCHE PATENTANMELDUNG NR.

EP 25 20 0517

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2026

| Im Recherchenbericht angeführtes Patentdokument | Datum der Veröffentlichung | Mitglied(er) der Patentfamilie | Datum der Veröffentlichung |
|---|---|---|---|
| DE 102019101811 A1 | 30-07-2020 | KEINE | |
| DE 102021205208 A1 | 24-11-2022 | DE 102021205208 A1 | 24-11-2022 |
| | | WO 2022243187 A1 | 24-11-2022 |
| EP 4273025 A1 | 08-11-2023 | CN 117002604 A | 07-11-2023 |
| | | EP 4273025 A1 | 08-11-2023 |
| | | US 2023356770 A1 | 09-11-2023 |
| BE 1031011 A1 | 30-05-2024 | KEINE | |
| CN 112977601 A | 18-06-2021 | CN 112977601 A | 18-06-2021 |
| | | DE 102019134143 A1 | 17-06-2021 |
| | | US 2021179166 A1 | 17-06-2021 |
| DE 102023201346 A1 | 22-08-2024 | CN 120641311 A | 12-09-2025 |
| | | DE 102023201346 A1 | 22-08-2024 |
| | | WO 2024170262 A1 | 22-08-2024 |
| DE 102006021445 A1 | 15-11-2007 | KEINE | |
| DE 102021205851 A1 | 15-12-2022 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 4273025 A1
- DE 102021205851 A1